# EUROPÄISCHE PATENTSCHRIFT

(11) **EP 3 181 778 B1**
(45) Veröffentlichungstag und Bekanntmachung des Hinweises auf die Patenterteilung: **12.08.2020**
(21) Anmeldenummer: 15201177.1
(22) Anmeldetag: 18.12.2015
(51) Int. Cl.: E04F 13/077, E04F 13/08, E04B 1/74

(54) **WANDBEKLEIDUNGSELEMENT, WANDBEKLEIDUNGSSYSTEM, WAND, SOWIE VERWENDUNG DER WANDBEKLEIDUNGSELEMENTE**
WALL CLADDING ELEMENT, WALL CLADDING SYSTEM, WALL, AND USE OF THE WALL CLADDING ELEMENTS
ÉLEMENT DE REVETEMENT DE PAROI, SYSTEME DE REVETEMENT DE PAROI, PAROI, ET UTILISATION DES ÉLEMENTS DE REVETEMENT DE PAROI

(43) Veröffentlichungstag der Anmeldung: 21.06.2017
(73) Patentinhaber: DAW SE, 64372 Ober-Ramstadt (DE)
(72) Erfinder: SCHMUCKER, Sebastian, 64395 Brensbach (DE)
(74) Vertreter: Metten, Karl-Heinz

(56) Entgegenhaltungen:
- EP-A1- 0 819 803
- EP-A1- 2 851 193
- WO-A1-2013/152048
- DE-A1- 3 545 001
- DE-A1- 3 725 098
- US-A- 5 473 847

## Beschreibung

Die vorliegende Erfindung betrifft ein Wandbekleidungselement, ein Wandbekleidungssystem, enthaltend eine Vielzahl an erfindungsgemäßen Wandbekleidungselementen, insbesondere ein hinterlüftetes oder hinterlüftbares Wandbekleidungssystem, sowie eine Wand, insbesondere eine Holzrahmenbauwand, enthaltend mindestens ein erfindungsgemäßes Wandbekleidungselement und/oder mindestens ein erfindungsgemäßes Wandbekleidungssystem sowie die Verwendung der erfindungsgemäßen Wandbekleidungselemente und der erfindungsgemäßen Wandbekleidungssysteme.

Häuser auf Basis der Holzrahmen- und Massivholzbauweise sind seit langem bekannt. Insbesondere lassen sich mit Hilfe der Holzrahmen- und Massivholzbauweise effizient und kostengünstig Fertighäuser herstellen. Beim Holzrahmenbau übernimmt ein Holzgerüst mit senkrechten und waagerechten Stäben die vertikale Tragefunktion, während plattenförmige Wandbauelemente für die horizontale Aussteifung verantwortlich sind. Auch können diagonal aufgebrachte oder eingelassene Bretter oder Streben zur Versteifung verwendet werden. Bei nach der Ständerbauweise hergestellten Gebäuden bilden die vertikal verlaufenden Ständer das tragende System aus, das sich regelmäßig von der Schwelle bis zum Dach erstreckt.

Die für die Außenfassaden verwendeten Wandsysteme sind regelmäßig gedämmt. Um Feuchtetransport im Allgemeinen zu gewährleisten und Kondensatbildung im Besonderen zu unterbinden, werden verstärkt sogenannte hinterlüftete Fassaden verbaut. Derartige Systeme sind material- und zeitaufwendig in der Herstellung und daher mit nicht geringen Kosten verbunden. Um den Feuchteeintrag möglichst gering zu halten, wird bei solchen Systemen die Außenfassade bislang jedenfalls regelmäßig nicht mit einem diffusionsoffenen Putz versehen. Auch wird nicht selten eine Diffusionssperrschicht angebracht. Dies ist jedoch einer wirkungsvollen Feuchteregulierung des Außenfassadendämmsystems abträglich. Überdies gelingt es mit den bekannten Systemen häufig nicht, Wärmebrücken zwischen benachbarten Fassadendämmelementen zu vermeiden.

Die EP 2 851 193 A1 beschreibt ein Wandbekleidungselement gemäß dem Oberbegriff der Ansprüche 1 und 2.

Die EP 2 886 738 befasst sich mit einer auf eine Gebäudeaußenwand montierten Dämmfassade mit vorwiegend horizontal verlaufenden Schwellen, die jedenfalls abschnittsweise an der Gebäudeaußenwand anliegen und daran befestigt sind. Außenseitig und mit Abstand zur Gebäudeaußenwand ist eine dämmende Beplankung vorgesehen. Zwischen dieser Beplankung und der Gebäudeaußenwand liegt das Dämmmaterial vor. Wesentlich soll sein, dass sich vertikal zwischen den horizontal verlaufenden Schwellen Stiele erstrecken, die stets beabstandet zu der Gebäudeaußenwand sind. Hierdurch soll es möglich sein, sowohl die thermische Wärmedämmung als auch die Tragfähigkeit und Planebenheit der gedämmten Fassadenstruktur zu verbessern.

Aus der DE 10 2012 101 931 ist ein Fassadendämmsystem mit einer Unterkonstruktion in Holzständerbauweise bekannt. Dieses Fassadendämmsystem umfasst neben der Unterkonstruktion eine Dämmlage aus einer Vielzahl an Mineralwollplatten und eine Putzschicht mit einem darin eingebetteten Armierungsgewebe. Die Mineralwollplatten haben mit Hilfe mechanischer Befestigungsmittel in Form von Metallklammern an der Unterkonstruktion befestigt zu sein. Ferner hat auf der der Putzschicht zugewandten Seite der Dämmlage ein Trägergewebe in Form eines Gittergewebes mit einer Maschenweite zwischen 3 mm und 42 mm und einer Reißfestigkeit in Kette und Schuss von mehr als 750 N/5 cm vorzuliegen. Schließlich haben die Metallklammern sowohl das Trägergewebe als auch die Dämmlage zu durchgreifen und in der Unterkonstruktion verankert zu sein, und das Trägergewebe hat in die Putzschicht eingebunden vorzuliegen. Auf diese Weise soll ein Fassadendämmsystem zugänglich sein, das kostengünstig und effizient hergestellt werden kann, ohne Einbußen bei der Standfestigkeit hinnehmen zu müssen.

Gemäß der DE 20 2008 000 597 soll sich ein Bauelement, das gleichzeitig Tragwerk und Dämmung umfasst, dadurch erhalten lassen, dass man mindestens eine Bahn aus druckfestem Dämmstoff und mindestens zwei Lamellen aus Vollholz oder Holzwerkstoffen abwechselnd miteinander verleimt. Indem man die Lamellen breiter ausführt, soll eine Hinterlüftungsebene zugänglich sein.

DE 20 2015 102 067 offenbart ein Außenwandelement in Holzrahmenkonstruktion mit einem Riegelwerk aus vertikal und horizontal angeordneten Konstruktionshölzern, welches mit einer Außenwandschale und einer Innenwandschale beplankt ist. Die Innenwandschale hat eine erste und eine hiervon beabstandete zweite winddichte Lage aufzuweisen. Erst durch Anbringung dieses Systems aus winddichten Lagen würde man eine hinreichende Winddichtheit erhalten.

In der DE 199 29 969 wird ein Holzrahmenbau-Element zum Aufbau von Fertighäusern aus zwei parallelen, mit Abstand zueinander angebrachten Platten vorgeschlagen, wobei der Zwischenraum zwischen diesen Platten mit einer Anzahl dicht aneinander anliegender Massivholzbalken ausgefüllt zu sein hat. Auf diese Weise sollen Fertighäuser in Holzrahmenbauweise zugänglich sein, die relativ preiswert herzustellen sind und gleichzeitig die Vorteile der Massivholzbauweise ermöglichen.

Die aus dem Stand der Technik bekannten Außenfassadensysteme sind noch stets mit Mängeln behaftet. Der vorliegenden Erfindung lag daher die Aufgabe zu Grunde, Außenfassadensysteme zur Verfügung zu stellen, die nicht mehr die Nachteile der aus dem Stand der Technik bekannten Systeme aufweisen und die insbesondere bei guter Wärmedämmung gleichzeitig über einen langen Zeitraum eine wirkungsvolle Feuchteregulierung ermöglichen. Insbesondere sollen solche Außenfassadensysteme zugänglich gemacht werden, die im Inneren nicht zur Schimmelbildung neigen und vorzugsweise auch auf der Außenfläche einer Algen- und/oder Pilzbildung entgegenwirken.

Demgemäß wurde in einer ersten Ausführungsvariante ein Wandbekleidungselement gemäß den Merkmalen des Patentanspruchs 1 gefunden. Ferner wurde in einer zweiten Ausführungsvariante ein Wandbekleidungselement gemäß den Merkmalen des Patentanspruchs 2 gefunden.

Die voneinander beabstandeten Stützstrukturen der Dämmschicht gemäss der ersten Ausführungsvariante und die voneinander beabstandeten Stützstrukturen der Deckschicht gemäss der zweiten Ausführungsvariante stellen insbesondere Stege dar.

Die Lüftungskanäle gemäss der ersten Ausführungsvariante werden insbesondere gebildet durch jeweils zwei einander benachbarte Stege und die mit den Stegen verbundene Deckschicht.

Die Lüftungskanäle gemäss der zweiten Ausführungsvariante werden insbesondere gebildet durch jeweils zwei einander benachbarte Stege und die mit den Stegen verbundene Dämmschicht.

Selbstverständlich können in einem erfindungsgemäßen Wandbekleidungselement auch die erste und die zweite Ausführungsvariante der Erfindung nebeneinander vorliegen. Die Begriffe "obere" und "untere" sind für den Fachmann ohne weiteres verständlich und beziehen sich auf die Orientierung der erfindungsgemäßen Wandbekleidungselemente bei gattungsgemäßer Anbringung bzw. Verwendung.

Die erfindungsgemäßen Wandbekleidungselemente lassen sich in sehr wenigen Arbeitsschritten erhalten und sind sehr einfach und geradlinig zu verbauen.

Die erfindungsgemäßen Wandbekleidungselemente sind in einer bevorzugten Ausgestaltung derart ausgebildet, dass die Innenseitenfläche der Dämmschicht freiliegend ist. Auf diese Weise ist eine konstruktiv effiziente Bauweise möglich, die als solche bereits hinreichend stabil ist. Auch kann die Anzahl der Fertigungsschritte nochmals erheblich verringert werden.

In einer möglichen Ausführungsform eines erfindungsgemäßen Wandbekleidungselements ist auf der Außenseitenfläche der Dämmschicht mindestens eine Schutzschicht vorgesehen. Diese Schutzschicht ist in einer bevorzugten Ausgestaltung diffusionsoffen. Diese Schutzschicht stellt in einer zweckmäßigen Ausgestaltung eine Wandschalungsbahn, bzw. einen Schutzanstrich dar. Für die erfindungsgemäßen Wandbekleidungselemente wird häufig auf eine sogenannte Wandschalungsbahn zurückgegriffen, um einen diffusionsoffene Schutzschicht gegen insbesondere Witterungseinflüsse aufzubringen. Auf diese Weise wird einerseits einer Beschädigung des Wandbekleidungselements vorgebeugt, andererseits ist noch stets eine wirkungsvolle Feuchteregulierung möglich.

Solche erfindungsgemäßen Wandbekleidungselemente haben sich als besonders zweckmäßig erwiesen, die ferner teilweise oder vollständig entlang eines, insbesondere deckschichtseitigen, Bereichs des unteren und/oder oberen Randes und/oder des ersten und/oder zweiten Seitenrandes, insbesondere entlang des ersten und/oder zweiten Seitenrandes, der Dämmschicht eine Vertiefung oder, insbesondere im Übergang zur benachbarten Deckschicht, eine Auslassung, jeweils eingerichtet und ausgelegt zur Aufnahme mindestens einer Montageverbindungseinheit für die konstruktive Verbindung mit einem benachbarten Wandbekleidungselement, insbesondere einer Verbindungslasche, oder, insbesondere integral mit der Dämmschicht, einen Vorsprung, eingerichtet und ausgelegt zur Einführung in eine Vertiefung oder Auslassung eines benachbarten Wandbekleidungselements für die konstruktive Verbindung mit demselben, aufweisen.

Alternativ oder zusätzlich können die erfindungsgemäßen Wandbekleidungselemente teilweise oder vollständig entlang eines Bereichs des unteren und/oder oberen Randes und/oder des ersten und/oder zweiten Seitenrandes, insbesondere des ersten und/oder zweiten Seitenrandes, der Deckschicht eine Vertiefung oder, insbesondere im Übergang zur benachbarten Dämmschicht, eine Auslassung, insbesondere Auslassung, eingerichtet und ausgelegt zur Aufnahme mindestens einer Montageverbindungseinheit für die konstruktive Verbindung mit einem benachbarten Wandbekleidungselement, insbesondere einer Verbindungslasche, oder, insbesondere integral mit der Dämmschicht, einen Vorsprung, eingerichtet und ausgelegt zur Einführung in eine Vertiefung oder Auslassung eines benachbarten Wandbekleidungselements für die konstruktive Verbindung mit demselben, aufweisen.

Des Weiteren kommen alternativ oder zusätzlich auch solche zweckmäßigen erfindungsgemäßen Wandbekleidungselemente in Betracht, die ferner teilweise oder vollständig entlang eines Bereichs des unteren und/oder oberen Randes und/oder des ersten und/oder zweiten Seitenrandes, insbesondere entlang des ersten und/oder zweiten Seitenrandes, der Deckschicht eine Versatzstufe für die konstruktive Verbindung mit einem benachbarten Wandbekleidungselement vorliegt mit einem Versatzstufenabsatz, der über den Rand der benachbarten Dämmschicht hinausragt und eingerichtet und ausgerichtet ist, um in einen korrespondierenden Versatz der Deckschicht eines benachbarten Wandbekleidungselements, insbesondere bündig, einzugreifen. Die letztgenannte Ausführungsform besitzt gegenüber den vorangehend genannten zwei Ausführungsformen den Vorteil, dass benachbarte erfindungsgemäße Wandbekleidungselemente miteinander verbunden werden können, ohne dass es eines separaten, zusätzlichen Bauteils bedarf. Vielmehr kann der über den Rand der Dämmschicht, beispielsweise den Seitenrand der Dämmschicht herausragende Stufenabsatz der Deckschicht in die Auslassung einer Versatzstufe der Deckschicht oder einen Freiraum zwischen Deckschicht und Dämmschicht eines benachbarten Wandbekleidungselements eingreifen und zum Beispiel mittels Verklebens und/oder mittels Klammern, Nägeln, Schrauben und/oder Dübel verbunden werden. Klammern im Sinne der Erfindung sollen auch Metallhaken umfassen.

Die Montageverbindungseinheit als erstes Verbindungselement eines ersten erfindungsgemäßen Wandbekleidungselements kann mit einem korrespondierenden Verbindungselement, auch zweites Verbindungselement genannt, eines benachbarten erfindungsgemäßen Wandbekleidungselements zum Beispiel als Nut/Feder-Verbindung, Stufenversatz, stumpfe Verbindung oder Feder/Feder-Verbindung mit Einlegestreifen zusammenwirken, wobei Nut/Feder-Verbindungen bevorzugt sind. Bevorzugt stellt die Montageverbindungseinheit eine Verbindungslasche dar, die regelmäßig wie eine Feder fungiert.

Demgemäß kann das erfindungsgemäße Wandbekleidungselement in einer besonders zweckmäßigen Ausgestaltung auch über mindestens eine Montageverbindungseinheit, insbesondere Verbindungslasche, verfügen, wobei ein erster Abschnitt der Montageverbindungseinheit in der Vertiefung oder Auslassung der Dämmschicht oder der Deckschicht vorliegt oder einführbar ist und wobei der zweite Abschnitt für eine Verbindung mit einem benachbarten Wandbekleidungselement ausgelegt und eingerichtet ist, vorzugsweise über eine Nut/Feder-Verbindung, eine Stufenversatzverbindung oder eine Feder/Feder-Verbindung mit Einlegestreifen, insbesondere eine Nut/Feder-Verbindung. Die Montageverbindungseinheiten, insbesondere die Verbindunglaschen, können zum Beispiel aus Holz oder einem Dämmmaterial gefertigt sein.

In einer weiteren bevorzugten Ausführungsform kann das erfindungsgemäße Wandbekleidungselement auch ein, teilweise oder vollständig entlang eines, insbesondere zentralen, Bereichs des unteren und/oder oberen Randes und/oder des ersten und/oder zweiten Seitenrandes der Dämmschicht vorliegendes erstes Arretierelement aufweisen, ausgelegt und eingerichtet zur konstruktiven Verbindung mit oder Aufnahme von einem zu diesem ersten Arretierelement korrespondierenden zweiten Arretierelement, insbesondere eines benachbarten Wandbekleidungselements. Hierbei kann vorgesehen sein, dass das erste Arretierelement ausgelegt und eingerichtet ist, um mit dem zweiten Arretierelement eine Nut/Feder-Verbindung, einen Stufenversatz oder eine Feder/Feder-Verbindung mit Einlegestreifen, insbesondere eine Nut/Feder-Verbindung, zu bilden. Besonders bevorzugt stellt das erste Arretierelement eine Feder oder eine Nut dar. Die Wechselwirkung von erstem und zweitem Arretierelement trägt auch zur besseren Verbindung benachbarter Wandbekleidungselemente bei, insbesondere wenn erstes und zweites Arretierelement mithilfe eines Klebers miteinander verbunden werden. Auch gelingt mit Hilfe von Arretierlementen bei der Montage eine genauere, leichtere und reproduzierbare Justierung benachbarter erfindungsgemäßer Wandbekleidungselemente.

Für die Dämmschicht der erfindungsgemäßen Wandbekleidungselemente wird auf eine Naturdämmplatte, insbesondere eine Naturfaserdämmplatte oder eine geschäumte Naturdämmplatte, zurückgegriffen werden.

Von Vorteil ist auch, dass für die erfindungsgemäßen Wandbekleidungselemente auf Naturdämmplatten, insbesondere Naturfaserdämmplatten, aus nachwachsenden Rohstoffen zurückgegriffen werden solche nachwachsenden Rohstoffe eingesetzt, die ausgewählt sind aus der Gruppe bestehend aus Holzfasern, Hanffasern, Flachsfasern, Nesselfasern, Seegras, Elefantengras, Mescanthum, Schilfrohr, Kokosfasern, Stroh und einer beliebigen Mischung der vorangehend genannten nachwachsenden Rohstoffe.

Die Naturfaserdämmplatte aus Holzfasern, dem Fachmann auch als Holzfaserdämmplatte bekannt, stellt vorzugsweise eine Holzweichfaserplatte dar. Für die Dämmschichten der erfindungsgemäßen Wandbekleidungselemente wird bevorzugt auf Holzfaserdämmplatten, vorzugsweise Holzweichfaserplatten, oder Hanffaserdämmplatten zurückgegriffen.

Um das ungewünschte Eindringen von Fremdkörpern und/oder Insekten über die Lüftungskanäle in die erfindungsgemäßen Wandbekleidungselemente zu verhindern, hat sich eine solche Ausführungsform als besonders zweckmäßig erwiesen, die ferner mindestens eine luftdurchlässige, insbesondere insektensichere, Abdeckung, insbesondere Lochprofilplatte, aufweist und die an dem oberen Rand der Dämmschicht und/oder der Deckschicht vorliegt und die vorzugsweise mit dem oberen Rand der Dämmschicht und/oder der Deckschicht verbunden ist. Diese Abdeckung ist dabei eingerichtet und ausgelegt zur Abdeckung der zweiten Lüftungsöffnungen der Lüftungskanäle. Alternativ sowie insbesondere zusätzlich kann eine luftdurchlässige, insbesondere insektensichere, Abdeckung, insbesondere Lochprofilplatte, auch an dem unteren Rand der Dämmschicht und/oder der Deckschicht vorliegen und dort vorzugsweise mit dem unteren Rand der Dämmschicht und/oder der Deckschicht verbunden sein, um die ersten Lüftungsöffnungen der Lüftungskanäle vor dem Eindringen von Fremdkörpern und/oder Insekten oder dergleichen zu schützen.

Eine besonders gute Feuchteregulierung wird mit dem erfindungsgemäßen Wandbekleidungselement auch dadurch ermöglicht, dass in einer bevorzugten Ausgestaltung die Innenseitenfläche und/oder die Außenseitenfläche der Dämmschicht mindestens bereichsweise und/oder dass das die Dämmschicht bildende Material mindestens in Teilen hydrophobiert sind.

Die Deckschicht des erfindungsgemäßen Wandbekleidungselements ist vorzugsweise als Deckplatte ausgeführt und stellt insbesondere eine Putzträgerplatte, eine Holzwerkstoffplatte, eine Dekorplatte, einen Blechabdeckung oder eine Oberflächen-pressvergütete Holzspanplatte (OPV-Platte) dar. Die Deckschicht bzw. Deckplatte kann zum Beispiel auch als Trägerplatte für Fassadenelemente wie Schiefer- oder Blechabdeckungen eingesetzt werden. Auch kann die Deckschicht bzw. Deckplatte eine Kork- oder Holzplatte darstellen oder hieraus bestehen. Des Weiteren eignet sich die Deckschicht bzw. Deckplatte als sogenannte funktionale Platte, beispielsweise als Trägerplatte für Fotovoltaik-Elemente wie Dünnschichtsolarzellen, Solarzellen auf Basis von amorphem oder kristallinem Silizium oder für organische Solarzellen.

Geeignete Putzträgerplatten können dabei ausgewählt sein aus der Gruppe bestehend aus mineralisch gebundenen Putzträgerplatten und harzgebundenen Putzträgerplatten. Hierbei sind harzgebundene Putzträgerplatten, beispielsweise auf Basis von Epoxidharzen, bevorzugt.

Derartige erfindungsgemäße Wandbekleidungselemente lassen sich besonders effizient und praktikabel verbauen, bei denen die Vielzahl an voneinander beabstandeten Stützstrukturen, insbesondere die Vielzahl an Stegen, oder die Vielzahl an Lüftungskanälen über dieselbe Breite verfügen. Zusätzlich kann hierbei auch in einer besonders bevorzugten Ausführungsform vorgesehen sein, dass die Vielzahl an voneinander beabstandeten Stützstrukturen, insbesondere die Vielzahl an Stegen, und die Vielzahl an Lüftungskanälen über dieselbe Breite verfügen. Derartige erfindungsgemäße Wandbekleidungselemente lassen sich besonders einfach und zuverlässig fehlerfrei verbauen, wobei, insbesondere bei Anbringung geeigneter Markierungen, die Lüftungskanäle vertikal benachbarter Wandbekleidungselemente stets passgenau und bündig ineinander übergehen.

Das erfindungsgemäße Wandbekleidungselement kommt vorzugsweise als Fassadenbekleidungselement zum Einsatz.

Um zu besonders dichten Wandeinheiten aus mehreren Wandbekleidungselementen zu gelangen, hat es sich als sehr vorteilhaft erwiesen, wenn der Rand der Deckschicht mindestens abschnittsweise hinterschnitten ist. Ein besonders ausgeprägtes Maß an Dichtigkeit, insbesondere Wind- und Feuchtigkeitsdichtigkeit von miteinander verbundenen benachbarten erfindungsgemäßen Wandbekleidungselementen erhält man auch dadurch, dass der hinterschnittene Rand der Deckschicht an dem Abschnitt benachbart zu dem unteren Rand, oberen Rand, ersten Seitenrand und/oder zweiten Seitenrand der Dämmschicht, der das Arretierelement in Form einer Nut aufweist, über den jeweiligen unteren Rand, oberen Rand, ersten Seitenrand bzw. zweiten Seitenrand der Dämmschicht hinausragt.

In einer weiteren zweckmäßigen Ausgestaltung kann dabei vorgesehen sein, dass die Deckschicht mindestens abschnittsweise über den unteren und/oder oberen Rand der Dämmschicht und/oder über den ersten und/oder zweiten Seitenrand der Dämmschicht hinausragt. Allerdings ist es ebenfalls möglich, dass die Deckschicht bündig mit dem unteren und/oder dem oberen Rand der Dämmschicht und/oder mit dem ersten und/oder mit dem zweiten Seitenrand der Dämmschicht abschließt.

Demgemäß ist es ebenfalls möglich, dass die Deckschicht und die Dämmschicht im Wesentlichen deckungsgleich sind.

Besonders bevorzugt sind hierbei solche erfindungsgemäßen Wandbekleidungselemente, bei denen die Deckschicht über den ersten oder zweiten Seitenrand der Dämmschicht und/oder über den unteren und/oder oberen Rand der Dämmschicht hinausragt.

Hierbei kann vorgesehen sein, dass bei dem erfindungsgemäßen Wandbekleidungselement die Deckschicht die Außenseitenfläche der Dämmschicht in einem Bereich entlang des ersten Seitenrandes oder des zweiten Seitenrandes und/oder in einem Bereich entlang des unteren und/oder des oberen Randes der Dämmschicht nicht vollständig abdeckt. Besonders bevorzugt liegt der durch die Deckschicht nicht abgedeckte Bereich der Außenseiterfläche der Dämmschicht am oberen oder unteren Rand der Dämmschicht vor. Auf diese Weise kann die Deckschicht eines vertikal benachbarten Wandbekleidungselements, die über die Dämmschicht hinausragt, genutzt werden, um das nicht abgedeckte Dämmschichtareal abzudecken. Auf diese Weise werden durchgehende Schlitze oder Furchen, über die Feuchtigkeit oder Wind in Richtung des Dämmschichtmaterials gelangen könnte, vermieden. Selbstverständlich kann auf entsprechende Weise verfahren werden, um die aneinander anstoßenden Seitenränder benachbarter Wandbekleidungselemente vor zum Beispiel Feuchte- und/oder Windeintrag zu schützen.

Solche erfindungsgemäßen Wandbekleidungselemente sind für den Fachmann besonders geeignet, bei denen die Deckschicht, insbesondere der obere und/oder der untere Rand der Deckschicht oder der Bereich entlang des oberen und/oder unteren Randes der Deckschicht, und/oder der ober und/oder untere Rand der Dämmschicht oder der Bereich entlang des unteren und/oder des oberen Randes der Dämmschicht, der nicht durch die Deckschicht abgedeckt ist, und/oder mindestens eine Stützstruktur, insbesondere ein Steg, in dem Bereich entlang des unteren und/oder des oberen Randes der Dämmschicht, der nicht durch die Deckschicht abgedeckt ist, insbesondere der Bereich entlang des oberen und/oder unteren Randes der Deckschicht, mindestens eine Markierung, insbesondere eine Vielzahl an seitlich voneinander beabstandeten Markierungen aufweist.

Auf diese Weise lassen sich benachbarte Wandbekleidungselemente stets pass- und lagegenau miteinander verbinden.

Die der Erfindung zugrunde liegende Aufgabe wird des Weiteren gelöst durch ein Wandbekleidungssystem, insbesondere hinterlüftetes oder hinterlüftbares Wandbekleidungssystem, umfassend mindestens zwei benachbarte, insbesondere eine Vielzahl an mindestens paarweise benachbarten erfindungsgemäßen Wandbekleidungselementen.

Bei den erfindungsgemäßen Wandbekleidungssystemen kann in zweckmäßigen Ausgestaltungen vorgesehen sein, dass die Wandbekleidungselemente mittels Verbindungsmitteln, insbesondere mechanischen Verbindungsmitteln, vorzugsweise Klammern, Schrauben, Nägeln und/oder Dübel, und/oder mittels Verklebens mit einer Wand, insbesondere Massivbauwand, beispielsweise Beton-, Porenbeton-, Ziegel-, Naturstein-, Kalksandstein- oder Klinkerwand, Holzmassivbauwand, beispielsweise Massivholzplatte und/oder OSB-Platte, oder Holzrahmenbauwand, vorzugsweise umfassend die Massivholzplatte und/oder die OSB-Platte, oder mit der Gefachdämmung eines Holzrahmenbaus oder mit dem Ständerwerk eines Holzrahmenbaus verbunden sind.

Hierbei können die Wandbekleidungselemente vorzugsweise mittels Schrauben und/oder Dübel und/oder mittels Verklebens mit der Massivbauwand, insbesondere der Beton-, Naturstein-, Kalksandstein- oder Klinkerwand, oder mit der Holzmassivbauwand, insbesondere mit der Massivholzplatte und/oder mit der OSB-Platte, oder mit der Holzrahmenbauwand, insbesondere umfassend die Massivholzplatte und/oder die OSB-Platte, oder mit der Gefachdämmung eines Holzrahmenbaus oder mit dem Ständerwerk eines Holzrahmenbaus verbunden werden.

Solche erfindungsgemäßen Wandbekleidungssysteme haben sich als besonders zweckmäßig erwiesen, bei denen die Montageverbindungseinheit, insbesondere die Verbindungslasche, zwischen zwei einander benachbarten Wandbekleidungselementen zur Verbindung dieser Wandbekleidungselemente vorgesehen ist, wobei die in den einander zugewandten Seitenrändern der einander benachbarten Dämmschichten oder Deckschichten jeweils vorliegenden Vertiefungen oder Auslassungen die Montageverbindungseinheit, insbesondere die Verbindungslasche, jeweils bereichsweise aufnehmen, wobei vorzugsweise die Montageverbindungseinheit, insbesondere die Verbindungslasche, und die Deckschicht und/oder die Dämmschicht mittels Verkleben oder mittels Verbindungsmitteln, insbesondere mechanischen Verbindungsmitteln, vorzugsweise Schrauben, Nägel, Dübel und/oder Klammern, insbesondere Klammern, miteinander verbunden sind, wobei diese Schrauben, Nägel oder Klammern, insbesondere Klammern, bis in die Dämmschicht hineinreichen. Die Verbindungsmittel wie Schrauben, Nägel, Klammern und/oder Dübel werden in einer besonders bevorzugten Ausgestaltung durch die Montageverbindungseinheit, insbesondere die Verbindungslasche, insbesondere wenn im montierten Zustand, d.h. zwei benachbarte Wandbekleidungselemente verbindend, hindurchgeführt, um das Wandbekleidungselement an einem Träger oder einer Unterlage, beispielsweise einer Wand oder einem Dachträger anzubringen.

Hierbei kann vorgesehen sein, dass der mindestens eine Vorsprung sich vom unteren und/oder oberen Rand und/oder vom ersten und/oder zweiten Seitenrand, insbesondere entlang des ersten und/oder zweiten Seitenrandes, der Dämmschicht erstreckt. Auch kann vorgesehen sein, dass sich der mindestens eine Vorsprung vom unteren und/oder oberen Rand und/oder vom ersten und/oder zweiten Seitenrand, insbesondere entlang des ersten und/oder zweiten Seitenrandes, der Deckschicht erstreckt.

Als besonders geeignet haben sich auch derartige erfindungsgemäßen Wandbekleidungssysteme erwiesen, bei denen der mindestens eine, insbesondere integrale, Vorsprung im Bereich der ersten und/oder zweiten Seitenwand zur Verbindung dieser Wandbekleidungselemente vorgesehen ist, wobei die in den einander zugewandten Seitenrändern der einander benachbarten Dämmschichten oder Deckschichten vorliegende Vertiefung oder Auslassung den Vorsprung aufnimmt.

Sehr zweckmäßige erfindungsgemäße Wandbekleidungssysteme sind auch dadurch zugänglich, dass benachbarte erfindungsgemäße Wandbekleidungselemente über das Ineinandergreifen miteinander korrespondierender Versatzstufen, der jeweils anstoßenden Deckschichten, insbesondere bündig, verbindbar oder verbunden, vorzugsweise zusätzlich verbunden mittels Verkleben und/oder mittels Verbindungsmitteln, insbesondere mechanischen Verbindungsmitteln, vorzugsweise Schrauben, Nägel, Dübel und/oder Klammern, sind. Hierbei werden die Verbindungsmittel wie Schrauben, Nägel, Klammern und/oder Dübel in einer besonders bevorzugten Ausgestaltung durch die ineinandergreifenden miteinander korrespondierenden Versatzstufen hindurchgeführt, um eine besonders feste Verbindung zu erhalten.

Ein Vorsprung im Sinne der Erfindung unterscheidet sich von einem Stufenversatz bzw. einer Versatzstufe im Sinne der Erfindung im Allgemeinen dadurch, dass sich der Vorsprung von einer Basisfläche, beispielsweise des Seitenrandes der Dämmschicht, erstreckt und wobei beidseitig des Vorsprungs Abschnitte der Basisfläche vorhanden sind, während beim Stufenversatz auf der einen Seite der Stufe eine Auslassung bzw. Aussparung vorliegt, welche bis auf eine Basisfläche zurückgeht und wobei jenseits dieser Stufe eine zum Stufenversatz gehörende Basisfläche nicht gegeben ist. Eine Feder, welche eingerichtet und ausgelegt ist, um in eine Nut einzugreifen, stellt zum Beispiel einen Vorsprung im Sinne der vorliegenden Erfindung dar.

Einander benachbarte erfindungsgemäße Wandbekleidungselemente liegen in den erfindungsgemäßen Wandbekleidungssystemen bevorzugt entlang ihrer einander zugewandten Ränder bündig miteinander verbunden vor. Auf diese Weise können Wärmebrücken besonders effizient unterbunden werden.

Auch kann bei den erfindungsgemäßen Wandbekleidungssystemen vorgesehen sein, dass die einander benachbarten Wandbekleidungselemente entlang ihrer einander zugewandten Seitenränder der Dämmschichten und/oder entlang ihrer einander zugewandten, insbesondere gegengleich hinterschnittenen, Ränder der Deckschichten bündig miteinander verbunden sind.

Des Weiteren sind solche erfindungsgemäßen Wandbekleidungssysteme in der praktischen Anwendung besonders zweckmäßig, bei denen mindestens eine Montageverbindungseinheit, insbesondere eine Verbindungslasche, zwischen zwei einander benachbarten Wandbekleidungselementen zur Verbindung dieser Wandbekleidungselemente vorgesehen ist. Hierbei haben die in den einander zugewandten Seitenrändern der einander benachbarten Dämmschichten jeweils vorliegenden Vertiefung die Montageverbindungseinheit, insbesondere die Verbindungslasche, jeweils bereichsweise aufzunehmen. D.h. in einer Ausgestaltung liegt die Montageverbindungseinheit, insbesondere die Verbindungslasche, partiell in der Vertiefung vor. Die Vertiefung kann in einer Ausführungsform im Bereich der jeweiligen Seitenränder auch durch die Deckschicht und die hiervon vermittels einer benachbarten Stützstruktur, insbesondere eines benachbarten Steges, beabstandete Dämmschicht gebildet werden.

In einer geeigneten Ausgestaltung können die Montageverbindungseinheit, insbesondere die Verbindungslasche, und die Deckschicht mittels Verbindungsmitteln, insbesondere mechanischen Verbindungsmittel, vorzugsweise Schrauben, Nägel, Dübel und/oder Klammern, insbesondere Klammern, miteinander verbunden sein. Hierbei reichen diese Schrauben, Nägel, Dübel oder Klammern, insbesondere Klammern, vorzugsweise bis in die Dämmschicht hinein. In einer zweckmäßigen Ausgestaltung können diese Verbindungsmittel wie Schrauben, Nägel, Dübel und/oder Klammern auch so ausgeführt sein, dass sie für die Anbringung der Wandbekleidungselemente an einer Unterlage oder einem Träger, beispielsweise einer Wand angebracht bzw. hiermit gleichzeitig auch verbunden werden können. Die der Erfindung zugrunde liegende Aufgabe wird auch gelöst durch eine Wand, insbesondere Holzrahmenbauwand, enthaltend mindestens ein erfindungsgemäßes Wandbekleidungssystem und/oder enthaltend mindestens zwei erfmdungsgemäße Wandbekleidungselemente.

Die erfindungsgemäße Wand stellt dabei vorzugsweise eine hinterlüftete oder hinterlüftbare, insbesondere eine hinterlüftete, Wand dar.

Die erfindungsgemäßen Wandbekleidungssysteme und Wände können sich auch über mehrere Geschosse einer Fassade erstrecken. Hierbei hat es sich als besonders vorteilhaft erwiesen, Brandriegel zwischen vertikal benachbarten erfindungsgemäßen Wandbekleidungselementen vorzusehen. Um über die gesamte Fassade eine Hinterlüftung zu gewährleisten, sind in einer bevorzugten Ausführungsform auch diese Brandriegel, beispielsweise auf Basis von Mineralwolle, mit Lüftungskanälen ausgestattet, die übergehen in die Lüftungskanäle der vertikal unter- und oberhalb angeordneten Lüftungskanäle der benachbarten Wandbekleidungselemente.

Die erfindungsgemäßen Wandbekleidungselemente eignen sich insbesondere als Außenfassadenbauelemente bzw. für die Verkleidung von Außenfassaden. Auch können sie für die Dämmung von Holzrahmenbauelementen oder für die Dämmung von Massivholzwänden oder für die Dämmung von verputzten oder unverputzten Massivbauwänden, insbesondere Beton-, Naturstein-, Kalksandstein- oder Klinkerwänden, eingesetzt werden. Schließlich lassen sich mit den erfindungsgemäßen Wandbekleidungselementen hinterlüftete bzw. hinterlüftbare Wandeinheiten oder Wände, insbesondere von hinterlüfteten oder hinterlüftbaren Außenfassaden, erhalten.

Mit der vorliegenden Erfindung geht die überraschende Erkenntnis einher, dass bereits mit Verwendung eines Dämmschichtsystems als solchem, gepaart mit einer herkömmlichen Deckplatte, beispielsweise Putzträgerplatte, voll funktionsfähige hinterlüftete gedämmte Außenfassaden zugänglich sind, die ohne weiteres fehlerfrei verbaut werden können. Durch die vorliegende Erfindung wird des Weiteren ein erhöhtes Abtrockenpotential im Falle eines unvorhersehbaren Feuchteeintrages realisiert. Auch kann die Gefahr der Ausbildung von Wärmebrücken bei der Herstellung von gedämmten hinterlüfteten Außenfassaden mit Hilfe der erfindungsgemäßen Wandbekleidungselemente erheblich reduziert, wenn nicht sogar eliminiert werden. Auch ist von großem Vorteil, dass auf die Deckplatte ein diffusionsoffener wie auch ein diffusionsdichter Putz aufgetragen werden können. Exemplarisch wird die Auftragung eines diffusionsdichten Putzes hervorgehoben. Als besonders zweckmäßig hat sich hierbei erwiesen, dass auch ein mehrfacher Putzauftrag möglich ist, ohne dass die Diffusionsfähigkeit der hinterlüfteten Fassade in Mitleidenschaft gezogen wird. Von besonderem Vorteil ist überdies, dass sich hinterlüftete Außenfassaden mit Hilfe der erfindungsgemäßen Wandbekleidungselemente in nur sehr wenigen Arbeitsschritten herstellen lassen. Dies kann insbesondere auch bei der Herstellung von Fertighäusern bzw. Fassadenelementen von Fertighäusern genutzt werden.

Weitere Merkmale und Vorteile der Erfindung ergeben sich aus der nachfolgenden Beschreibung, in der Ausführungsbeispiele der Erfindung anhand schematischer Zeichnungen beispielhaft erläutert werden, ohne jedoch dadurch die Erfindung zu beschränken. Dabei zeigen:
- Figur 1: eine schematische Ansicht des erfindungsgemäßen Wandbekleidungselements von oben,
- Figur 2: eine schematische Ansicht des erfindungsgemäße Wandbekleidungselements gemäß Figur 1 von der Seite,
- Figur 3: eine schematische Ansicht des erfindungsgemäßen Wandbekleidungselements gemäß Figur 1 von vorne,
- Figur 4: eine schematische Ansicht eines Ausschnitts einer erfindungsgemäßen Wand von vorne,
- Figur 5: eine schematische Querschnittsansicht eines Ausschnitts einer weiteren Ausführungsform einer erfindungsgemäßen Wand,
- Figur 6: eine schematische Querschnittsansicht eines Ausschnitts einer weiteren Ausführungsform einer erfindungsgemäßen Wand,
- Figur 7: eine schematische Ansicht einer weiteren Ausführungsform eines erfindungsgemäßen Wandbekleidungselements von oben, und
- Figur 8: eine schematische Ansicht einer weiteren Ausführungsform eines erfindungsgemäßen Wandbekleidungselements von oben.

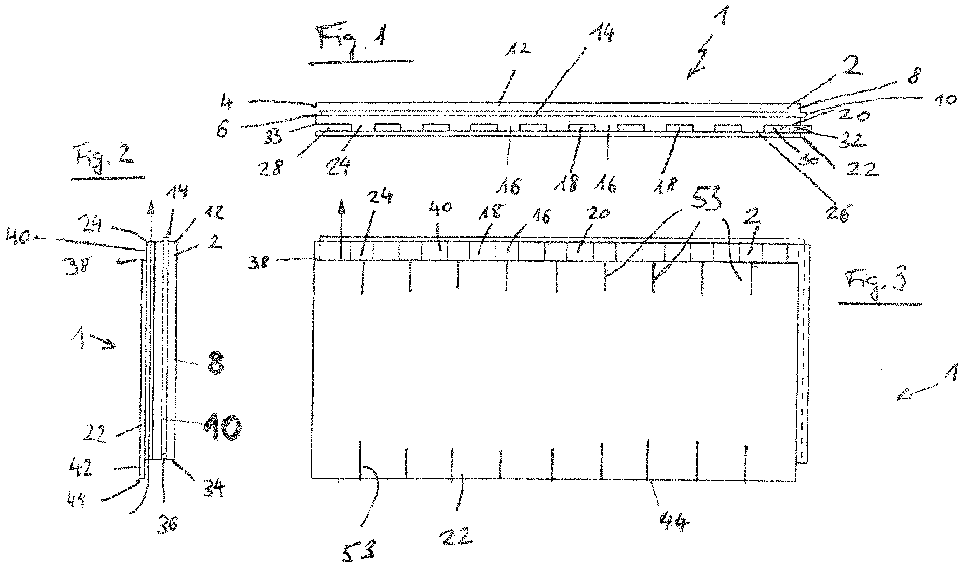

Figur 1 zeigt den schematischen Aufbau eines erfindungsgemäßen Wandbekleidungselements 1 vermittels Ansicht von oben. Von der Fassadenseite abgewandt liegt die Dämmplatte 2 vor. Diese Dämmplatte 2 kann zum Beispiel aus einem Holzfasermaterial gefertigt sein und eine Holzfaserdämmplatte darstellen. An dem ersten Seitenrand 4 liegt ein Verbindungselement in Form einer Nut 6 vor. An dem zweiten Seitenrand 8 befindet sich ein Verbindungselement 10 in Form einer Feder. Entlang des oberen Randes 12 ist in der dargestellten Ausführungsvariante eine Feder 14 vorgesehen. Der Außenfassade zugewandt verfügt die Dämmplatte 2 über eine Vielzahl an benachbarten Stützstrukturen in Form von Stegen 16. In der dargestellten Ausführungsform sind die Stege 16 integraler Bestandteil der Dämmplatte 2 und bilden zusammen mit den dazwischenliegenden Hohlräumen bzw. Lüftungskanäle 18 eine Lüftungsebene 20 aus. Fassadenseitig wird in der dargestellten Ausführungsform des erfindungsgemäßen Wandbekleidungselements 1 eine Deckplatte in Form einer Putzträgerplatte 22 angebracht. Diese Deckplatte 22 ist mit den Stegen 16 fest verbunden und bildet abgegrenzte Lüftungskanäle 18 aus. Die Deckplatte 22 erstreckt sich von dem ersten Seitenrand 4 bis zu dem zweiten Seitenrand 8 der Dämmplatte 2 und geht damit über die beabstandet von diesen Seitenrändern vorliegenden Stege 24 und 26 hinaus. Auf diese Weise wird ein Hohlraum bzw. eine Vertiefung 28 bzw. 30 gebildet, in den zwecks Verbindung mit einem benachbarten Wandbekleidungselement (nicht abgebildet) eine auf die Größe des Hohlraums abgestimmte Verbindungslasche 32 eingeführt werden kann. In einer bevorzugten Ausgestaltung liegt fassadenaußenseitig auf der Dämmplatte 2 eine Schutzlage 33 vor. Hierbei kann es sich zum Beispiel um eine diffusionsoffene Barriereschicht handeln.

Figur 2 zeigt das erfindungsgemäße Wandbekleidungselement 1 in schematischer Seitenansicht. Die Dämmplatte 2 ist oberseitig, d.h. am oberen Rand 12 mit einer Feder 14 ausgestattet. Entlang des zweiten Seitenrandes 8 erstreckt sich die Feder 10. Entlang des unteren Randes 34 der Dämmplatte 2 verläuft als weiteres Verbindungselement die Nut 36. In der Seitenansicht gemäß Figur 2 ist des Weiteren der Steg 24 von der Seite zu erkennen. Verbunden mit dem Steg 24 bzw. mit den weiteren Stegen 16 der Dämmplatte 2 (nicht abgebildet) liegt die Deckplatte 22 vor. Während der obere Rand 38 der Deckplatte 22 nicht bis an den oberen Rand 12 der Dämmplatte 2 heranreicht, sondern einen oberen Abschnitt 40 unbedeckt lässt, geht der untere Abschnitt 42 der Deckplatte 22 über den unteren Rand 34 der Dämmplatte 2 hinaus, so dass sich der untere Rand 44 der Deckplatte 22 beabstandet vom unteren Rand 34 der Dämmplatte 2 befindet. In der dargestellten Ausführungsform verfügen der Abschnitt 42 und der Bereich 40 im Wesentlichen über eine identische Ausdehnung. Auf diese Weise können benachbarte erfindungsgemäße Wandbekleidungselemente 1 in einer Weise miteinander verbunden werden, dass stets sichergestellt ist, dass zwischen benachbarte Dämmplatten keine Feuchtigkeit gelangen kann. Auch wird auf diese Weise sichergestellt, dass auch bei starker Windlast die Dämmplatte 2 hiervon unbeeinflusst bleibt. Der in Figur 2 wiedergegebene Pfeil zeigt die Hinterlüftung in Form einer Lüftungsrichtung durch die Lüftungskanäle 18 an. Am oberen sowie unteren Rand der Deckplatte 22 sind beabstandet voneinander geradlinige, parallel zueinander verlaufende Markierungslinien 53 angebracht, die auch im Wesentlichen parallel zu den Lüftungskanälen 18 bzw. Stegen 16 verlaufen. Diese sind jeweils im Wesentlichen mittig oberhalb der Stege 16 angeordnet. Ein korrespondierendes Wandbekleidungselement, das wie das Wandbekleidungselement 2 im unteren Bereich über eine sich über die Dämmplatte hinaus erstreckende Deckschicht verfügt, kann auf der Deckplatte an korrespondierenden Positionen mit entsprechenden Markierungen versehen sein (nicht abgebildet). Diese Markierungen vertikal benachbarter Wandbekleidungselemente sind dann nur jeweils aneinander anzulegen. Diese Art der Anbringung gestattet es auf einfache und zuverlässige Weise sicherzustellen, dass bei vertikal benachbarten Wandbekleidungselementen die korrespondierenden Lüftungskanäle stets passgenau ineinander übergehen. Somit kann mit den erfindungsgemäßen Wandbekleidungselementen eine funktionsfähige Hinterlüftungsebene über die gesamte Fassadenseite völlig unproblematisch, gleichwohl absolut zuverlässig ohne weitere besondere Vorkehrungen erhalten werden.

Figur 3 entnimmt man eine schematische Frontansicht des erfindungsgemäßen Wandbekleidungselements 1 gemäß Figur 1. Die Deckplatte 22 schließt nicht bündig im Bereich ihrer oberen und unteren Ränder 36 bzw. 44 mit der Dämmplatte 2 ab. Der im oberen Bereich freigelassene Abschnitt 40 zeigt die sich wiederholende Anordnung der Stege 16 und der Lüftungskanäle 20. Das in Figur 3 dargestellte erfindungsgemäße Wandbekleidungselement 1 gibt bereits die Orientierung wieder, in der dieses Wandbekleidungselement verbaut wird. Danach verlaufen die Stege 16 und die Lüftungskanäle 20 nach Einbau in eine Außenfassade im Wesentlichen vertikal.

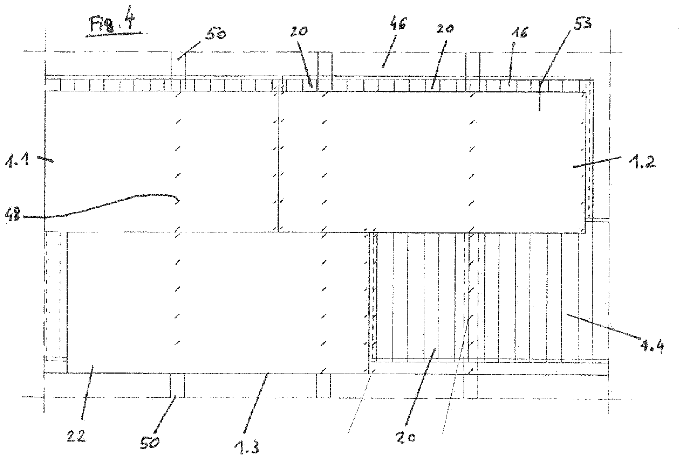

Figur 4 zeigt einen Ausschnitt einer noch nicht komplett fertig gestellten erfindungsgemäßen Wand 46. In der dargestellten Abbildung sind insgesamt vier erfindungsgemäße Wandbekleidungselemente 1.1bis 1.4 bereits miteinander verbaut worden, wobei aus Gründen der besseren Veranschaulichung des Verlauf der Stege und Lüftungskanäle benachbarter Wandbekleidungselemente bei dem Wandbekleidungselement 1.4 die Deckplatte 22 nicht mit abgebildet wurde. Die einzelnen Wandbekleidungselemente 1 sind über korrespondierende Nut/Feder-Systeme miteinander verbunden (nicht abgebildet). Über geeignete Befestigungsmittel 48 in Form von Klammern, insbesondere Metallhaken, liegen die Wandbekleidungselemente 1 an Holzständern 50 vor. Die Bereiche zwischen benachbarten Holzständer 50 können zusätzlich mit einem Wärmedämmmaterial ausgefüllt sein (nicht abgebildet). Wie Figur 4 zeigt, lassen sich vertikal benachbarte Wandbekleidungselemente ohne weiteres in der Weise anordnen, dass die Lüftungskanäle 20 eines Wandbekleidungselements passgenau in die Lüftungskanäle des benachbarten Wandbekleidungselements übergehen. Auf diese Weise entsteht eine effektive hinterlüftete Außenfassade. Indem man die Dimensionierung der einzelnen Wandbekleidungselemente 1 aufeinander abgestimmt, wobei vorzugsweise auf identische Wandbekleidungselemente 1 zurückgegriffen wird, und überdies an geeigneten Stellen auf der Deckplatte 22 und den Stegen Markierungen 53 vorsieht, kann stets sichergestellt werden, dass die Lüftungskanäle einander vertikal benachbarter Wandbekleidungselemente passgenau und bündig ineinander übergehen. Die erfindungsgemäßen Wandbekleidungselemente machen es möglich, dass stets einwandfrei hinterlüftete Außenfassaden erhalten werden, ohne dass, abgesehen von der Ausrichtung der Markierungen, besondere Maßnahmen ergriffen werden müssen oder eine besondere Sorgfalt bei der Ausrichtung und Anbringung der Wandbekleidungselemente vorzusehen ist.

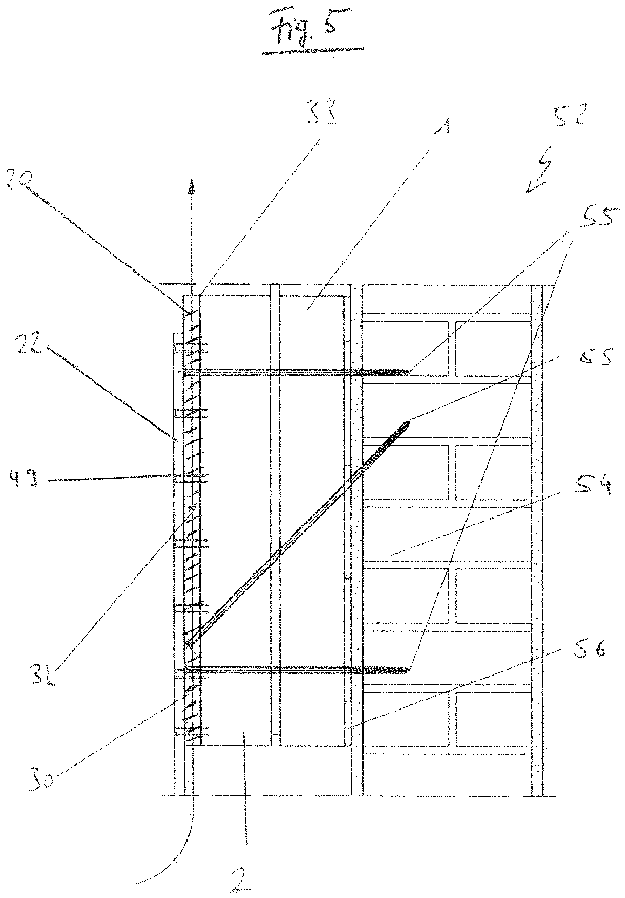

In Figur 5 ist ein Abschnitt einer erfindungsgemäßen Wand 52 wiedergegeben. Das erfindungsgemäße Wandbekleidungselement 1 ist über horizontal und schräg eingestellte Schrauben 55 mit einer Massivbauwand 54 vermittels geeigneter Dübel verbunden. Die Schrauben 55 werden hierbei bevorzugt im Laschenbereich angebracht. D.h. die Schraube wird hierbei bevorzugt durch die Lasche 32 geführt. Die Lasche 32 ist hier durch Hinzufügen einer Strichelung besonders kenntlich gemacht. Außerdem ist es bevorzugt, wie in Figur 5 dargestellt, die Verbindungseinheit, hier in Form einer Schraube 55, zugleich auch durch das Material der Dämmschicht 2 zu führen. Dies trifft sowohl auf die schräg wie auch auf die gerade in das Wandbekleidungselement einführten Schrauben 55 zu. Zusätzlich kann das Wandbekleidungselement 1 mit einem Kleber 56 mit der Massivbauwand 54 verbunden werden. Die Deckplatte 22 ist, vorzugsweise im Laschenbereich, über geeignete Verbindungsmittel 49 in Form von Klammern, insbesondere Metallhaken, mit der Deckplatte 22 des Nachbarelementes verbunden. Demgemäß werden die Metallhaken bzw. Klammern bevorzugt durch die Lasche 32 geführt. Die Klammern, insbesondere Metallhaken, dürfen in die Dämmebene hineinreichen. Die Metallhaken bzw. Klammern werden dabei vorzugsweise so gesetzt, dass ein Ver- oder Abrutschen der Dämmplatte 2 verhindert werden kann. Diese Verbindungsmittel 49 werden hierbei bevorzugt im Bereich der Ebene der Stege 16 in die Lasche 32 eingebracht bzw. mit dieser verbunden, um eine möglichst sichere und feste Anbindung zu gewährleisten. Der Pfeil in Figur 5 soll die Hinterlüftung in Form einer Lüftungsrichtung durch die (nicht abgebildeten) Lüftungskanäle 20 andeuten, die in dem Wandbekleidungselement 1 vorliegen.

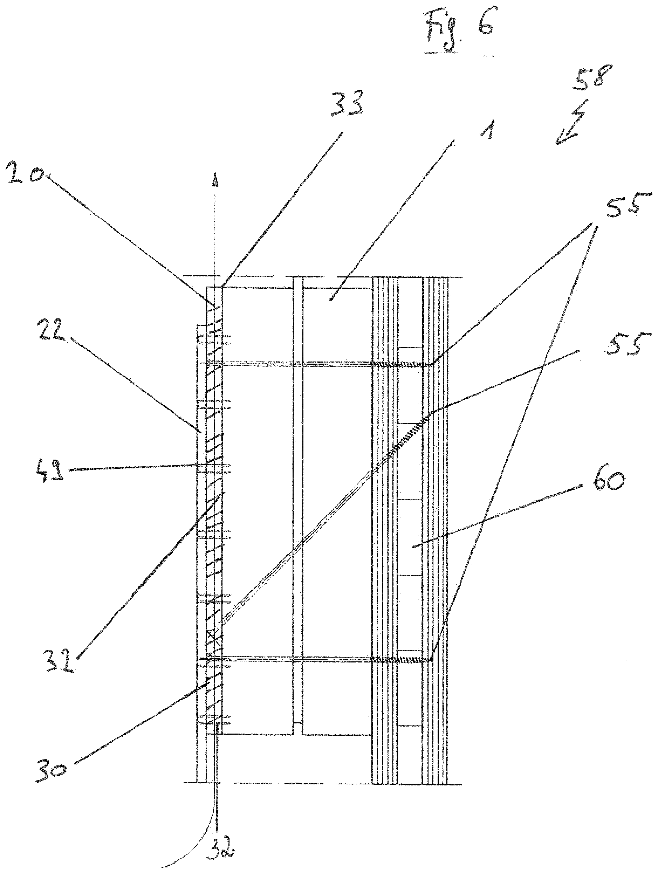

Bei der Ausführungsform gemäß Fig. 5 handelt es sich um eine nachträglich an eine Massivbauwand angebrachte Fassadendämmung. Die Gefahr von Wärmebrücken kann mit Hilfe der erfindungsgemäßen Wandbekleidungselemente dadurch reduziert werden, dass das Dämmelement 1 zunächst mit Hilfe der Klebemasse 56 und der Schrauben 55 mit der Massivbauwand verbunden wird. In gleicher Weise lässt sich im Grunde auch eine erfindungsgemäße Wand 58 herstellen, bei der, abweichend von der Ausführungsform gemäß Figur 5, anstelle der Massivbauwand in Form einer Klinkerwand eine Massivholzwand 60, wie in Figur 6 gezeigt, verwendet wird. Die Lasche 32 ist in Figur 6 ebenfalls durch Hinzufügen einer Strichelung besonders kenntlich gemacht. Der Pfeil in Figur 6 soll die Hinterlüftung in Form einer Lüftungsrichtung durch die (nicht abgebildeten) Lüftungskanäle 20 andeuten, die in dem Wandbekleidungselement 1 vorliegen.

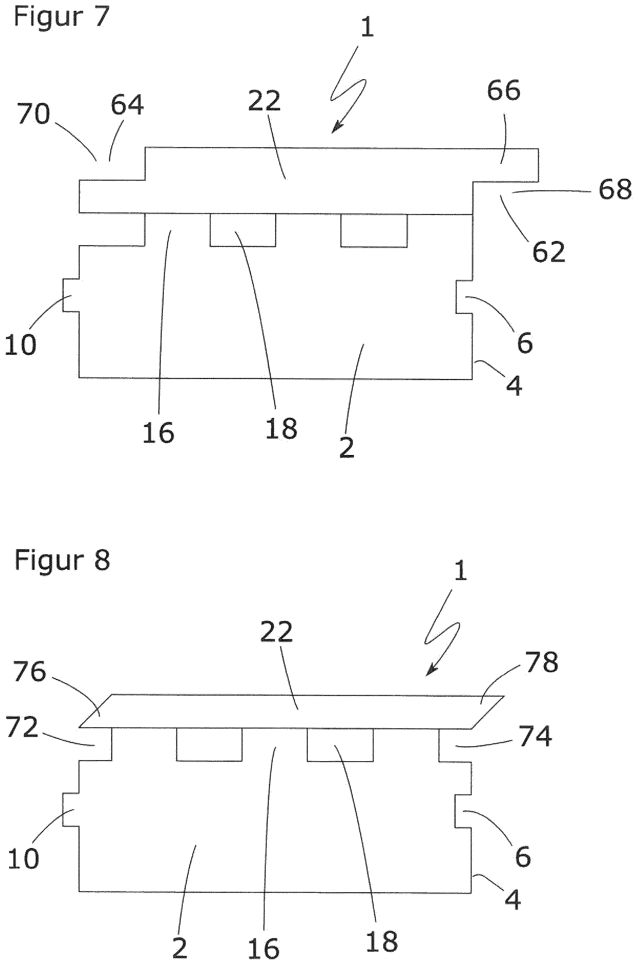

Bei den vorangehend dargestellten Ausführungsformen stellt der Kleber 56 bzw. die durch Anbringung des Klebers 56 erhaltene Klebeschicht ein optionales Merkmal dar, das für das Funktionieren des erfindungsgemäßen Dämmelements 1 nicht zwingend erforderlich ist. Es kann vielmehr zu einer noch festeren Verbindung beitragen. Figur 7 zeigt eine weitere Ausführungsform eines erfindungsgemäßen Wandbekleidungselements 1. Die Dämmschicht enthält wiederum integral eingearbeitete Lüftungskanäle 18 zwischen benachbarten Stegen 16. An den Frontseiten der Stege 16 liegt die Deckschicht 22 an und ist mit den Stegen verbunden. Die Deckschicht 22 ist an ihren einander gegenüberliegenden Seitenrändern mit zueinander komplementären Stufenversatz-Einheiten 62 und 64 ausgestattet. Stufenversatz-Einheit 62 wird gebildet durch die Stufe 66 und die Aussparung 68. Die Stufe 66 greift in eine korrespondierende Aussparung der Deckplatte eines benachbarten Wandbekleidungselements vorzugsweise bündig ein. Eine solche Aussparung 70 ist für das Wandbekleidungselement 1 der Figur 7 bei der Stufenversatz-Einheit 64 wiedergegeben. Zur leichteren und besseren Justierung und Arretierung sowie zur Erhöhung der Dichtigkeit benachbarter Wandbekleidungselemente sind diese mit korrespondierenden Arretierelementen in Form von Nuten 6 und Federn 10 ausgestattet (hier abgebildet an den sich gegenüberliegenden Seitenrändern). Die Stufe 66 kann, sobald in eine korrespondierende Aussparung eines benachbarten Wandbekleidungselements eingefügt, mittels Klebens und/oder mit Hilfe Verbindungsmitteln wie Klammern, Schrauben, Nägel und/oder Dübel befestigt werden, vorzugsweise durch ineinandergreifende korrespondierende Stufenversätze benachbarter Wandbekleidungselemente hindurch. Bei der Ausführungsform eines erfindungsgemäßen Wandbekleidungselements gemäß Figur 7 entfällt die Notwendigkeit, benachbarte Wandbekleidungselemente über eine separate Verbindungslasche miteinander zu verbinden. Hierdurch kann die Anzahl der an der Baustelle erforderlichen Bauteile nochmals reduziert werden. Um eine besonders ausgeprägte Dichtigkeit, z.B. gegen das Eindringen von Luft, beispielsweise bei hoher Windlast, und/oder Wasser, zu gewährleisten, hat es sich als sehr vorteilhaft erwiesen, die Stufenversatz-Einheit (hier Einheit 62), deren Stufe (hier Stufe 66) über den benachbarten Rand der Dämmschicht 2 hinausragt (hier Seitenrand 4), auf derjenigen Seite anzubringen, in der die Nut (hier Nut 6) vorliegt.

Figur 8 entnimmt man eine weitere Ausgestaltung eines erfindungsgemäßen Wandbekleidungselements 1. Die Deckschicht 22 ist an ihren gegenüberliegenden Seitenrändern schräg angeschnitten, und zwar in einer Weise, dass jedenfalls an einem Seitenrand ein Hinterschnitt entsteht, der über den Seitenrand der darunterliegend angebrachten Dämmschicht 2 hinausragt. Diese angeschrägte Deckplatte 22 wird bei Verbindung mit einem benachbarten Wandbekleidungselement passgenau in einen korrespondierend abgeschrägten Seitenrand der benachbarten Deckschicht eingefügt. Bei der Ausgestaltung gemäß Figur 8 werden die Aussparungen 72 und 74 an den gegenüberliegenden Seitenrändern der Dämmschicht dazu verwendet, eine Montageverbindungseinheit, vorzugsweise eine Verbindungslasche, in Teilen aufzunehmen, so dass über diese Verbindungslasche, deren nicht in der Aussparung 72 oder 74 vorliegende Abschnitt in korrespondierende Aussparungen benachbarter Wandbekleidungselemente eingreift. Anschließend kann eine dauerhafte Verbindung benachbarter Wandbekleidungselemente hergestellt werden, beispielsweise mittels Klebens, Dübel, Nägeln, Schrauben und/oder Klammern. Um eine besonders ausgeprägte Dichtigkeit, z.B. gegen das Eindringen von Luft, beispielsweise bei hoher Windlast, und/oder Wasser, zu gewährleisten, hat es sich als sehr vorteilhaft erwiesen, den hinterschnittenen Randabschnitt 78, der über den benachbarten Rand der Dämmschicht 2 hinausragt (hier Seitenrand 4), auf derjenigen Seite anzubringen, in der die Nut (hier Nut 6) vorliegt. Der über den Seitenrand 4 hinausragende Abschnitt stellt hierbei vorzugsweise den abgeschrägten Abschnitt des hinterschnittenen Randes dar. Bevorzugt ist die abgeschrägte Seite hierbei zur Dämmschicht 2 orientiert. Dieser Abschnitt 78 ist dabei in der Weise ausgestaltet, dass er mit einem korrespondierenden Abschnitt eines benachbarten Wandbekleidungselements, wie z.B. für das Wandbekleidungselement 1 mit dem Randabschnitt 76 dargestellt, passgenau verbunden werden kann, um eine besonders dichte Verbindung zu ermöglichen.

## Patentansprüche

1. Wandbekleidungselement (1), umfassend
a1) mindestens eine Dämmschicht (2) mit einer Außen- und einer gegenüberliegenden Innenseitenfläche, einem unteren Rand und einem gegenüberliegenden oberen Rand sowie einem ersten Seitenrand und einem gegenüberliegenden zweiten Seitenrand,
b1) eine Vielzahl an voneinander beabstandeten Stützstrukturen (16), die außenseitenflächig integraler Bestandteil der Dämmschicht (2) ist und die sich außenseitenflächig vom unteren Rand der Dämmschicht (2) bis zum oberen Rand erstreckt,
c1) mindestens eine Deckschicht (22) mit einer Außen- und einer gegenüberliegenden Innenseitenfläche, einem unteren Rand und einem gegenüberliegenden oberen Rand sowie einem ersten Seitenrand und einem gegenüberliegenden zweiten Seitenrand, die mit der Vielzahl an voneinander beabstandeten Stützstrukturen (16) verbunden ist, und
d1) eine Vielzahl an Lüftungskanälen (18), gebildet durch die voneinander beabstandete Stützstrukturen (16) und die diesen Stützstrukturen verbundene Deckschicht (22), wobei sich die Lüftungskanäle (18) außenseitenflächig vom unteren Rand der Dämmschicht (2) bis zum oberen Rand erstrecken und
dass die Lüftungskanäle (18) über eine erste Lüftungsöffnung am unteren Rand der Dämmschicht (2) und über eine zweite Lüftungsöffnung am oberen Rand verfügen, **dadurch gekennzeichnet, dass**
die Dämmschicht eine Naturdämmplatte umfasst oder hieraus besteht, gebildet aus nachwachsenden Rohstoffen ausgewählt aus der Gruppe bestehend aus Holzfasern, Hanffasern, Flachsfasern, Nesselfasern, Seegras, Elefantengras, Mescanthum, Schilfrohr, Kokosfasern, Stroh und einer beliebigen Mischung der vorangehend genannten nachwachsenden Rohstoffe.

2. Wandbekleidungselement (1), umfassend
c2) mindestens eine Deckschicht (22) mit einer Außen- und einer gegenüberliegenden Innenseitenfläche, einem unteren Rand und einem gegenüberliegenden oberen Rand sowie einem ersten Seitenrand und einem gegenüberliegenden zweiten Seitenrand,
a2) mindestens eine Dämmschicht (2) mit einer Außen- und einer gegenüberliegenden Innenseitenfläche, einem unteren Rand und einem gegenüberliegenden oberen Rand sowie einem ersten Seitenrand und einem gegenüberliegenden zweiten Seitenrand,
**gekennzeichnet durch**
b2) eine Vielzahl an voneinander beabstandeten Stützstrukturen (16), die innenseitenflächig integraler Bestandteil der Deckschicht (22) ist und die sich innenseitenflächig vom unteren Rand der Deckschicht (22) bis zum oberen Rand erstreckt,
wobei die mindestens eine Dämmschicht (2) mit der Vielzahl an voneinander beabstandeten Stützstrukturen (16) verbunden ist, und
d2) eine Vielzahl an Lüftungskanälen (18), gebildet durch die voneinander beabstandeten Stützstrukturen (16) und die mit diesen Stützstrukturen verbundene Dämmschicht (2),
wobei sich die Lüftungskanäle (18) innenseitenflächig vom unteren Rand der Deckschicht (22) bis zum oberen Rand erstrecken und wobei die Lüftungskanäle (18) über eine erste Lüftungsöffnung am unteren Rand der Deckschicht (22) und über eine zweite Lüftungsöffnung am oberen Rand verfügen,
wobei die Dämmschicht eine Naturdämmplatte umfasst oder hieraus besteht, gebildet aus nachwachsenden Rohstoffen ausgewählt aus der Gruppe bestehend aus Holzfasern, Hanffasern, Flachsfasern, Nesselfasern, Seegras, Elefantengras, Mescanthum, Schilfrohr, Kokosfasern, Stroh und einer beliebigen Mischung der vorangehend genannten nachwachsenden Rohstoffe.

3. Wandbekleidungselement (1) nach Anspruch 1 oder 2, ferner umfassend teilweise oder vollständig entlang eines Bereichs des unteren oder oberen Randes oder des ersten oder zweiten Seitenrandes der Dämmschicht (2) ein erstes Arretierelement (6, 10) ausgelegt und eingerichtet zur konstruktiven Verbindung mit oder Aufnahme von einem zu diesem ersten Arretierelement korrespondierenden zweiten Arretierelement (6, 10).

4. Wandbekleidungselement (1) nach einem oder mehreren der vorangehenden Ansprüche, **dadurch gekennzeichnet, dass**
die eine Naturdämmplatte eine Naturfaserdämmplatte umfasst oder hieraus besteht.

5. Wandbekleidungselement (1) nach Anspruch 4, **dadurch gekennzeichnet, dass** die Naturdämmplatte eine Holzfaserdämmplatte, eine Holzweichfaserplatte oder eine Hanffaserdämmplatte umfasst oder hieraus besteht.

6. Wandbekleidungselement (1) nach einem oder mehreren der vorangehenden Ansprüche, **gekennzeichnet durch**
mindestens eine luftdurchlässige Abdeckung vorliegend am oder verbunden mit dem oberen oder unteren Rand der Dämmschicht (2) oder der Deckschicht (22), eingerichtet und ausgelegt zur Abdeckung der zweiten Lüftungsöffnungen der Lüftungskanäle.

7. Wandbekleidungselement (1) nach einem oder mehreren der vorangehenden Ansprüche, **dadurch gekennzeichnet, dass**
die Innenseitenfläche der Dämmschicht (2) freiliegend ist.

8. Wandbekleidungselement (1) nach einem oder mehreren der vorangehenden Ansprüche, **dadurch gekennzeichnet, dass**
der Rand der Deckschicht (22) mindestens abschnittsweise hinterschnitten ist.

9. Wandbekleidungselement (1) nach einem oder mehreren der vorangehenden Ansprüche, **dadurch gekennzeichnet, dass**
die Deckschicht (22) mindestens abschnittsweise über den unteren oder oberen Rand der Dämmschicht (2) oder über den ersten oder zweiten Seitenrand der Dämmschicht (2) hinausragt oder dass die Deckschicht (22) bündig mit dem unteren oder dem oberen Rand der Dämmschicht (2) oder mit dem ersten oder mit dem zweiten Seitenrand der Dämmschicht (2) abschließt, oder
dass die Deckschicht (22) die Außenseitenfläche der Dämmschicht (2) in einem Bereich entlang des ersten Seitenrandes oder des zweiten Seitenrandes oder in einem Bereich entlang des unteren oder des oberen Randes der Dämmschicht (2) nicht vollständig abdeckt.

10. Wandbekleidungssystem, umfassend
mindestens zwei benachbarte Wandbekleidungselemente nach einem oder mehreren der vorangehenden Ansprüche.

11. Wandbekleidungssystem nach Anspruch 10, **dadurch gekennzeichnet, dass** die Wandbekleidungselemente mittels Verbindungsmittel oder mittels Verklebens mit einer Wand oder mit der Gefachdämmung eines Holzrahmenbaus oder mit dem Ständerwerk eines Holzrahmenbaus verbunden sind.

12. Wand, enthaltend mindestens ein Wandbekleidungssystem nach Anspruch 10 oder 11 oder enthaltend mindestens zwei Wandbekleidungselemente nach einem der Ansprüche 1 bis 9.

13. Wand nach Anspruch 12, **dadurch gekennzeichnet, dass**
die Innenseitenfläche der Wandbekleidungselemente zumindest teilweise an der verputzten oder unverputzten Wand oder an der Gefachdämmung eines Holzrahmenbaus oder an dem Ständerwerk eines Holzrahmenbaus anliegt oder hiermit verbunden ist.

14. Verwendung der Wandbekleidungselemente nach einem der Ansprüche 1 bis 9 als Außenfassadenbauelement oder
für die Verkleidung von Außenfassaden oder
für die Dämmung von Holzrahmenbauelementen oder
für die Dämmung von Massivholzwänden oder
für die Dämmung von verputzten oder unverputzten Massivbauwänden oder
für die Herstellung hinterlüfteter oder hinterlüftbarer Wandbekleidungssysteme oder von Wänden.

## Claims

1. A wall cladding element (1), comprising
a1) at least one insulating layer (2) having an outer and an opposite inner side surface, a lower edge and an opposite upper edge as well as a first side edge and an opposite second side edge,
b1) a plurality of spaced-apart support structures (16), which is an integral part of the insulating layer (2) on the outside surface and which extends on the outside surface from the lower edge of the insulating layer (2) to the upper edge,
c1) at least one cover layer (22) having an outer and an opposite inner side surface, a lower edge and an opposite upper edge as well as a first side edge and an opposite second side edge, which is connected to the plurality of spaced-apart support structures (16), and
d1) a plurality of ventilation ducts (18), formed by the spaced-apart support structures (16) and the cover layer (22) connected to these support structures,
wherein the ventilation ducts (18) extend on the outside surface from the lower edge of the insulating layer (2) to the upper edge and the ventilation ducts (18) have a first ventilation opening on the lower edge of the insulating layer (2) and have a second ventilation opening on the upper edge,
**characterized in that**
the insulating layer comprises a natural insulation panel or consists hereof, formed from renewable raw materials selected from the group consisting of wood fibers, hemp fibers, flax fibers, nettle fibers, seaweed, elephant grass, miscanthus, reeds, coconut fibers, straw and any mixture of the aforementioned renewable raw materials.

2. A wall cladding element (1), comprising
c2) at least one cover layer (22) having an outer and an opposite inner side surface, a lower edge and an opposite upper edge as well as a first side edge and an opposite second side edge,
a2) at least one insulating layer (2) having an outer and an opposite inner side surface, a lower edge and an opposite upper edge as well as a first side edge and an opposite second side edge,
**characterized by**
b2) a plurality of spaced-apart support structures (16), which is an integral part of the cover layer (22) on the inner surface side and which extends on the inner surface side from the lower edge of the cover layer (22) to the upper edge,
wherein the at least one insulating layer (2) is connected to the plurality of spaced-apart support structures (16), and
d2) a plurality of ventilation ducts (18), formed by the spaced-apart support structures (16) and the insulating layer (2) connected to these support structures,
wherein the ventilation ducts (18) extend on the inner surface side from the lower edge of the cover layer (22) to the upper edge and wherein the ventilation ducts (18) have a first ventilation opening on the lower edge of the cover layer (22) and have a second ventilation opening on the upper edge,
wherein the insulating layer comprises a natural insulation panel or consists hereof, formed from renewable raw materials selected from the group consisting of wood fibers, hemp fibers, flax fibers, nettle fibers, seaweed, elephant grass, miscanthus, reeds, coconut fibers, straw and any mixture of the aforementioned renewable raw materials.

3. The wall cladding element (1) according to Claim 1 or 2, further comprising, partially or completely along a region of the lower or upper edge or of the first or second side edge of the insulating layer (2), a first locking element (6, 10) designed and adapted to constructively connect to or receive a second locking element (6, 10) corresponding to said first locking element.

4. The wall cladding element (1) according to one or more of the preceding claims, **characterized in that**
the one natural insulation panel comprises a natural fiber insulation panel or consists hereof.

5. The wall cladding element (1) according to Claim 4, **characterized in that** the natural insulation panel comprises a wood fiber insulation panel, a softwood fiberboard or a hemp fiber insulation panel or consists hereof.

6. The wall cladding element (1) according to one or more of the preceding claims, **characterized by**
at least one air-permeable cover provided on or connected to the upper or lower edge of the insulating layer (2) or the cover layer (22), which is adapted and designed to cover the second ventilation openings of the ventilation ducts.

7. The wall cladding element (1) according to one or more of the preceding claims, **characterized in that**
the inner side surface of the insulating layer (2) is exposed.

8. The wall cladding element (1) according to one or more of the preceding claims, **characterized in that**
the edge of the cover layer (22) is undercut at least in sections.

9. The wall cladding element (1) according to one or more of the preceding claims, **characterized in that**
the cover layer (22) projects at least in sections over the lower or upper edge of the insulating layer (2) or over the first or second side edge of the insulating layer (2), or that the cover layer (22) terminates flush with the lower or the upper edge of the insulating layer (2) or with the first or with the second side edge of the insulating layer (2), or
that the cover layer (22) does not completely cover the outer side surface of the insulating layer (2) in a region along the first side edge or the second side edge or in a region along the lower or the upper edge of the insulating layer (2).

10. A wall cladding system, comprising
at least two adjacent wall cladding elements according to one or more of the preceding claims.

11. The wall cladding system according to Claim 10, **characterized in that** the wall cladding elements are connected by means of connecting means or by means of bonding to a wall or to the cavity insulation of a wood frame construction or to the frame work of a wood frame construction.

12. A wall containing at least one wall cladding system according to Claim 10 or 11 or containing at least two wall cladding elements according to any one of Claims 1 to 9.

13. The wall according to Claim 12, **characterized in that**
the inner side surface of the wall cladding elements lies at least partially in contact with the plastered or unplastered wall or the cavity insulation of a wood frame construction or with the frame work of a wood frame construction or is connected hereto.

14. Use of the wall cladding elements according to any one of Claims 1 to 9 as an outer facade architectural element or
for cladding outer facades or
for insulating wooden frame structural elements or
for insulating solid timber walls or
for insulating plastered or unplastered solid construction walls or
for producing back-ventilated or back-ventilatable wall cladding systems or walls.

## Revendications

1. Élément de revêtement de paroi (1) comprenant
a1) au moins une couche isolante (2) avec une face latérale extérieure et une face latérale intérieure en vis-à-vis, un bord inférieur et un bord supérieur en vis-à-vis ainsi qu'un premier bord latéral et un second bord latéral en vis-à-vis,
b1) de multiples structures de support espacées les unes des autres (16), qui font partie intégrante de la couche isolante (2) par leur face latérale extérieure et qui s'étendent du bord inférieur de la couche isolante (2) jusqu'au bord supérieur par leur face latérale extérieure,
c1) au moins une couche de finition (22) avec une face latérale extérieure et une face latérale intérieure en vis-à-vis, un bord inférieur et un bord supérieur en vis-à-vis ainsi qu'un premier bord latéral et un second bord latéral en vis-à-vis, qui est reliée à de multiples structures de support espacées les unes des autres (16), et
d1) de multiples canaux d'aération (18) formés par les structures de support espacées les unes des autres (16) et par la couche de finition (22) reliée à ces structures de support,
dans lequel les canaux d'aération (18) s'étendent du bord inférieur de la couche isolante (2) jusqu'au bord supérieur par leur face latérale extérieure et dans lequel les canaux d'aération (18) disposent d'une première ouverture d'aération sur le bord inférieur de la couche isolante (2) et d'une seconde ouverture d'aération sur le bord supérieur, **caractérisé en ce que**
la couche isolante comporte un panneau isolant naturel ou en est constitué, formé à base de matières premières renouvelables, sélectionnées à partir d'un groupe composé de fibres de bois, de fibres de chanvre, de fibres de lin, de fibres d'ortie, de crin marin, d'herbe à éléphant, de miscanthus, de roseau, de fibres de coco, de paille et d'un mélange quelconque des matières premières renouvelables mentionnées précédemment.

2. Élément de revêtement de paroi (1) comprenant
c2) au moins une couche de finition (22) avec une face latérale extérieure et une face latérale intérieure en vis-à-vis, un bord inférieur et un bord supérieur en vis-à-vis ainsi qu'un premier bord latéral et un second bord latéral en vis-à-vis,
a2) au moins une couche isolante (2) avec une face latérale extérieure et une face latérale intérieure en vis-à-vis, un bord inférieur et un bord supérieur en vis-à-vis ainsi qu'un premier bord latéral et un second bord latéral en vis-à-vis,
**caractérisé par**
b2) de multiples structures de support espacées les unes des autres (16), qui font partie intégrante de la couche de finition (22) par leur face latérale intérieure et qui s'étendent du bord inférieur de la couche de finition (22) jusqu'au bord supérieur par leur face latérale intérieure, dans lequel ladite couche isolante (2) au moins est reliée aux multiples structures de support espacées les unes des autres (16), et
d2) de multiples canaux d'aération (18), formés par les structures de support espacées les unes des autres (16) et par la couche isolante (2) reliée à ces structures de support,
dans lequel les canaux d'aération (18) s'étendent du bord inférieur de la couche de finition (22) jusqu'au bord supérieur par leur face latérale intérieure et dans lequel les canaux d'aération (18) disposent d'une première ouverture d'aération sur le bord inférieur de la couche de finition (22) et d'une seconde ouverture d'aération sur le bord supérieur,
dans lequel la couche isolante comporte un panneau isolant naturel ou en est constitué, formé à base de matières premières renouvelables sélectionnées à partir d'un groupe composé de fibres de bois, de fibres de chanvre, de fibres de lin, de fibres d'ortie, de crin marin, d'herbe à éléphant, de miscanthus, de roseau, de fibres de coco, de paille et d'un mélange quelconque des matières premières renouvelables mentionnées précédemment.

3. Élément de revêtement de paroi (1) selon la revendication 1 ou 2, comprenant de plus en partie ou en totalité, le long d'une zone du bord inférieur ou supérieur ou bien du premier ou du second bord latéral de la couche isolante (2), un premier élément de blocage (6, 10) conçu et mis en place pour l'assemblage structural ou la réception d'un second élément de blocage (6, 10) correspondant à ce premier élément de blocage.

4. Élément de revêtement de paroi (1) selon l'une ou plusieurs des revendications précédentes, **caractérisé en ce que**
ledit panneau isolant naturel comporte un panneau isolant de fibres naturelles ou en est constitué.

5. Élément de revêtement de paroi (1) selon la revendication 4, **caractérisé en ce que**
le panneau isolant naturel comporte un panneau isolant de fibres de bois, un panneau de fibres de bois tendre ou un panneau isolant de fibres de chanvre ou en est constitué.

6. Élément de revêtement de paroi (1) selon l'une ou plusieurs des revendications précédentes, **caractérisé par**
au moins une chape perméable à l'air se trouvant en contact ou en liaison avec le bord inférieur ou supérieur de la couche isolante (2) ou de la couche de finition (22), mise en place et conçue pour couvrir les secondes ouvertures d'aération des canaux d'aération.

7. Élément de revêtement de paroi (1) selon l'une ou plusieurs des revendications précédentes, **caractérisé en ce que**
la face latérale intérieure de la couche isolante (2) est mise à découvert.

8. Élément de revêtement de paroi (1) selon l'une ou plusieurs des revendications précédentes, **caractérisé en ce que**
le bord de la couche de finition (22) présente une contre-dépouille au moins par endroits.

9. Élément de revêtement de paroi (1) selon l'une ou plusieurs des revendications précédentes, **caractérisé en ce que**
la couche de finition (22) dépasse au moins par endroits au-dessus du bord inférieur ou supérieur de la couche isolante (2) ou bien au-dessus du premier ou du second bord latéral de la couche isolante (2) ou que la couche de finition (22) affleure au bord inférieur ou supérieur de la couche isolante (2) ou bien au premier ou au second bord latéral de la couche isolante (2), ou que la couche de finition (22) ne couvre pas totalement la face latérale extérieure de la couche isolante (2) dans une zone le long du premier bord latéral ou du second bord latéral ou bien dans une zone le long du bord inférieur ou supérieur de la couche isolante (2).

10. Système de revêtement de paroi comprenant
au moins deux éléments de revêtement de paroi selon l'une ou plusieurs des revendications précédentes.

11. Système de revêtement de paroi selon la revendication 10, **caractérisé en ce que** les éléments de revêtement de paroi sont reliés à une paroi ou à l'isolation de hourdage d'une construction à ossature en bois ou au treillis de montants d'une construction à ossature en bois à l'aide d'un moyen d'assemblage ou par collage.

12. Paroi, comportant au moins un système de revêtement de paroi selon la revendication 10 ou 11 ou bien comportant au moins deux éléments de revêtement de paroi selon l'une des revendications 1 à 9.

13. Paroi selon la revendication 12, **caractérisée en ce que** la face latérale intérieure des éléments de revêtement de paroi est plaquée au moins en partie contre la paroi crépie ou apparente ou contre l'isolation de hourdage d'une construction à ossature en bois ou contre le treillis de montants d'une construction à ossature en bois ou y est reliée.

14. Utilisation des éléments de revêtement de paroi selon l'une des revendications 1 à 9 comme éléments de construction d'une façade extérieure ou
pour revêtir des façades extérieures ou
pour isoler les éléments de construction d'une ossature en bois ou
pour isoler des parois en bois massif ou
pour isoler des parois de construction massives crépies ou apparentes ou
pour fabriquer des parois ou des systèmes de revêtement mural ventilés ou
pouvant être ventilés.
